(19) Europäisches Patentamt

European Patent Office

Office européen des brevets

(11) Publication number: **0 194 677 B1**

(12) **EUROPEAN PATENT SPECIFICATION**

(45) Date of publication of patent specification: **15.09.93**  (51) Int. Cl.⁵: **C08F 8/44**, C08L 23/08, C08F 210/02, //(C08F210/02, 220:06,220:12)

(21) Application number: **86103351.2**

(22) Date of filing: **12.03.86**

(54) Ionically cross-linked low molecular weight ternary copolymer.

(30) Priority: **13.03.85 JP 50130/85**

(43) Date of publication of application:
**17.09.86 Bulletin 86/38**

(45) Publication of the grant of the patent:
**15.09.93 Bulletin 93/37**

(84) Designated Contracting States:
**DE FR GB**

(56) References cited:
**EP-A- 0 115 190**
**FR-A- 1 596 991**
**GB-A- 1 011 981**

(73) Proprietor: **Nippon Petrochemicals Co., Ltd.**
**Saiwai Building, 1-3-1 Uchisaiwai-cho**
**Chiyoda-ku**
**Tokyo(JP)**

(72) Inventor: **Kojima, Shinji**
**3-35-4, Ohkubo Konan-ku**
**Yokohama-shi Kanagawa-ken(JP)**
Inventor: **Amatsu, Takeo**
**1885-11-520, Kizukisumiyoshicho Nakahara-ku**
**Kawasaki-shi Kanagawa-ken(JP)**
Inventor: **Kitaichi, Akira**
**4890, Seyacho Seya-ku**
**Yokohama-shi Kanagawa-ken(JP)**

(74) Representative: **Strehl Schübel-Hopf Groening & Partner**
**Maximilianstrasse 54**
**D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a low molecular weight ternary copolymer cross-linked ionically with a metallic ion and compositions wherein such novel ionically cross-linked low molecular weight ternary copolymers are utilized.

More specifically, the present invention relates to an ionically cross-linked low molecular weight ternary copolymer prepared by reacting at least a part or the whole of acid groups in a low molecular weight ternary copolymer of ethylene-acrylic acid-alkyl acrylate or ethylene-methacrylic acid-alkyl methacrylate with a metallic cation having a valence in the range of 1 to 3 as well as compositions obtained by incorporating said copolymer in a synthetic resin such as thermoplastic resin and a fine inert material.

(2) Description of the Prior Art

A number of ethylene copolymers ionically cross-linked with metallic ion have heretofore been known. As an old example, Japanese Patent Publication No. 6810/1964 discloses an ionically cross-linked copolymer prepared by reacting a copolymer of ethylene-$\alpha$, $\beta$-ethylenically unsaturated carboxylic acid with a water-soluble ionic metal compound.

Furthermore Japanese Patent Publication No. 31556/1974 is characterized by saponification reaction of a copolymer prepared from ethylene and $\alpha$, $\beta$-ethylenically unsaturated carboxylic ester by the use of a basic metallic compound in aliphatic alcohols or an organic solvent containing aliphatic alcohols, and acid treatment of the saponified reaction product.

GB-A-1 011 981 relates to ionically crosslinked ternary copolymers obtainable by ionically crosslinking a base copolymer comprising ethylene, $\alpha,\beta$-ethylenically unsaturated mono- or dicarboxylic acid units and a third copolymerizable monomer and EP-A-0 115 190 discloses also ternary ionomers of ethylene, unsaturated carboxylic acids and a softening comonomer.

In each case of the above prior inventions, however, only ionic cross-linked products of high molecular weight are obtained.

With respect to ionic copolymers of low molecular weight, metallic salts of binary copolymers have been known. For example, according to Japanese Patent Laid-open No. 128704/1982, low molecular weight copolymer salts obtained by neutralizing up to 100% a low molecular copolymer of copolymer acid comprised of ethylene and an $\alpha$, $\beta$-ethylenically unsaturated carboxylic acid and having a molecular weight of 500 to 15000 with cations of metals selected from Group IIA of the Periodic Table of Elements have been proposed.

It may be said, however, that this prior art directs to low molecular weight copolymer salts of binary copolymer acid comprised of essentially ethylene and $\alpha$, $\beta$-ethylenically unsaturated carboxylic acid.

The above described binary copolymer salts involve problems such as corrosion of apparatus and the like, besides it is difficult to produce copolymer acid having a desirable molecular weight and acid value, because of high temperature and high pressure in the case where such copolymer acids have previously been produced. Thus, when it is intended that such copolymer acids as described above are used as lubricants and dispersion aids for various polymers, melting point and softening point of these copolymer acids cannot be freely controlled so as to be adapted for the various polymers, so that there is a tendency of lacking wide adaptability.

3. Objects of the Invention

It is a first object of the present invention to provide a novel ionically cross-linked low molecular weight ternary copolymer having wide adaptability suitable for lubricants, dispersion aids, coupling agents, crystallization promotors, crystal nucleus agents, paints, adhesives, sealing materials, textile treatments and the like for varieties of polymer and inert material.

A second object of the present invention is to provide compositions comprised of various polymers and said ionically cross-linked low molecular weight ternary copolymer, and these compositions are those for improving workability, moldability and the like properties of varieties of polymer.

A third object of the present invention is to provide compositions comprised of various polymers, various fine inert materials and said ionically cross-linked low molecular weight ternary copolymer, and these compositions are applied for fine inert material as dispersion aids, coupling agents, crystallization promoters or the like and function to improve dispersibility of fillers, pigments and the like, or dimensional stability, mechanical strength and the like of molded articles.

EP 0 194 677 B1

The present invention has been made as a result of concentrating inventors' energies on the above-mentioned problems.

In this connection, the present first invention provides an ionically cross-linked low molecular weight ternary copolymer obtainable by reacting at least a part or the whole of acid groups in a low molecular weight ternary copolymer with a metallic cation having a valence in the range of 1 to 3, said low molecular weight ternary copolymer having a content of ethylene moieties of 80-99.5 mol % and a total content of acrylic or methacrylic acid and alkyl acrylate or methacrylate moieties of 0.5 - 20 mol%, the ratio between said acid and said ester being from 10-90 to 90-10 %, and a viscosity-average molecular weight within a range of 500 - 20,000;and said low molecular weight ternary copolymer being obtained by thermally degrading at 200 to 500°C ethylene-alkyl acrylate or methacrylate copolymer having a comparatively high molecular weight, wherein the melt index of said ethylene-alkyl acrylate or methacrylate copolymer having a comparatively high molecular weight is 300 g/10 min. or less, and the alkyl acrylate or methacrylate content in the molecular chain is 0.5 to 25 mol%. Furthermore, the present invention is directed to a composition comprising :

(A) 100 parts by weight of at least one polymer selected from the group consisting of thermoplastic resins, thermosetting resins, rubber, and the mixture thereof; and

(B) 0.1 - 15 parts by weight of the above ionically crosslinked low molecular weight ternary copolymer, and to a further composition comprising :

(A) 100 parts by weight of at least one polymer selected from the group consisting of thermoplastic resins, thermosetting resins, rubber, and the mixture thereof;

(B) 0.1 - 150 parts by weight of a fine inert material; and

(C) 0.1 - 20 parts by weight of the above ionically crosslinked low molecular weight ternary copolymer.

The low molecular weight ternary copolymer used in the present invention is a thermally degraded product which is produced by pyrolyzing commercially available ethylene-alkyl acrylate or methacrylate copolymers (hereinafter referred to simply as "(meth)acrylate").

Namely, ethylene-acrylic or -methacrylic acid (hereinafter referred to simply as "-(meth)acrylic acid") -alkyl (meth)acrylate copolymer is produced from a low molecular weight ternary copolymer which is said thermally degraded product in such a manner that, ethylene-alkyl (meth)acrylate copolymer having a comparatively high molecular weight is reacted at a temperature of 200 - 500°C and a pressure of 5 - 500 x $10^5$ Pa (kg/cm$^2$) in the presence of water in inert atmosphere. The ethylene-alkyl (meth)acrylate copolymers referred to in the present invention are commercially available ethylene-alkyl (meth)acrylate copolymers of comparatively high molecular weight which are easily produced by, for example, a high-pressure copolymerizing process in which a free-radical catalyst is used and which is publicly known in the art. The melt index of said ethylene-alkyl (meth)acrylate copolymer is 300 g/10 min. or less and the alkyl (meth)-acrylate content in the molecular chain is 0.5 - 25 mol%, preferably 2 - 15 mol%. While the manner for producing the inert atmosphere in the present invention is not specifically limited, an inert gas such as nitrogen, carbon dioxide gas, argon or helium is passed through the reaction system to completely exclude air therefrom and the use of nitrogen is preferable.

Furthermore the reaction temperature and pressure in case of embodying the present invention depend upon the properties of materials to be used, i.e., average molecular weight of the ethylene-alkyl (meth)-acrylate copolymer, content of the alkyl acrylate, degree in degrading polymer, besides amount of extent water, but the reaction temperature, reaction pressure, and reaction time are within the range of 200 - 500°C, 5 - 500 x $10^5$ Pa (kg/cm$^2$), and 1 - 10 hours, preferably 2 - 6 hours, respectively.

In the case where said reaction temperature is less than 200°C degradation of copolymer is scarcely observed, whilst when the temperature exceeds 500°C, alkyl acrylate in the copolymer volatilizes, besides decarboxylating reaction occur, so that pyrolysis becomes strong and this is undesirable.

Although a viscosity-average molecular weight of said low molecular weight ternary copolymer is different dependent upon its various applications, it is within a range of 500 - 20,000, and preferably 1,000 - 15,000.

Viscosity-average molecular weight referred to in the present invention is determined by measuring intrinsic viscosity [$\eta$] at 135°C in decalin and calculating in accordance with the following equation:

[$\eta$] = KM$^\alpha$
(K = 14.3 x $10^{-5}$ (d$\ell$/g), $\alpha$ = 0.82)

Among the low molecular weight ternary copolymer thus produced, those having an ethylene content within a range of 80 - 99.5 mol%, and a (meth)acrylic acid and alkyl (meth)acrylate total content within a

3

range of 0.5 - 20 mol% are utilized.

Because of cross-linking due to metal ions in the present invention, the ratio of the moieties of (meth)-acrylic acid and alkyl (meth)acrylate existing in the molecular chains of the low molecular weight copolymer produced is an important factor for adjusting the physical properties of the ionically cross-linked copolymers.

For example, it is necessary for adjusting the (meth)acrylic acid moiety existing in the molecular chains of a ethylene-(meth)acrylic acid-alkyl (meth)acrylate ternary copolymer in order to obtain a desirable acid value, so that the amount of the remaining alkyl (meth)acrylate moiety changes. Moreover, when the content of alkyl (meth)acrylate in the raw material of comparatively high molecular weight ethylene-alkyl (meth)-acrylate is changed, it is possible that amount of (meth) acrylic acid moiety in the low molecular weight ternary copolymer produced is kept constant and the amount of alkyl (meth) acrylate moiety is changed. In other words, when the acid value is maintained at constant and the amount of alkyl (meth)acrylate is changed, it is possible to vary melting point and softening point of low molecular weight copolymers, whereby these copolymers can be applied to varieties of use.

Namely, it is important in the present invention that the ratio of the (meth)acrylic acid moiety and alkyl (meth)acrylate moiety existing in its molecular chains is maintained within a range of 10 - 90%.

In the case where (meth)acrylic acid moiety is less than 10% ionic cross-linking is insufficient in respect to the metal ion, whilst when exceeded 90%, the resulting product becomes a substantially binary copolymer and this is undesirable.

The alkyl (meth)acrylate in said ethylene-(meth)acrylic acid-alkyl (meth)acrylate copolymers involves preferably an alkyl group having 1 - 4 carbon atoms such as methyl, ethyl, isopropyl, n-butyl, isobutyl or tertiary butyl group.

The metal ion to be added to said low molecular weight ternary copolymer in the present invention is preferably added in the form of an aqueous solution of a metallic compound having a valence of 1 - 3 and which is selected from a first ion group consisting of (1) $Na^+$, $K^+$, $Li^+$, (2) $Mg^{++}$, $Ca^{++}$, $Ba^{++}$, $Zn^{++}$, $Sb^{++}$, $Cu^{++}$, $Fe^{++}$, (3) $Al^{+++}$, $Fe^{+++}$, as well as mixtures thereof and alkaline metal ions are particularly preferable. Furthermore such metallic compounds constituting a second ion group include, as so-called basic metallic compound, sodium hydroxide, magnesium hydroxide, potassium hydroxide, zinc hydroxide, calcium oxide, sodium methoxide, sodium ethoxide, magnesium oxide, nickel acetate, sodium carbonate, magnesium acetate or zinc acetate, and aqueous solution of these metallic compounds may preferably be employed.

More preferable metallic cations are $Na^+$, $K^+$, $Mg^{++}$, $Ca^{++}$, and $Zn^{++}$ cations, and the low molecular weight ternary copolymers of the present invention are cross-linked therewith. Cation-containing materials are preferably hydroxides, oxides, oxylates, or acetates.

According to the present invention, arbitrarily oligomerized cross-linked ternary copolymers may be produced by reacting an ethylene-alkyl (meth)acrylate copolymer of a comparatively high molecular weight as its raw material in the presence of water and a metallic ion in an inert atmosphere at a temperature of 200 - 500°C and a pressure of 5 - 500 x $10^5$ Pa (kg/cm$^2$), wherein the most important factors in this reaction are the presence of water and the temperature conditions. In this connection, the water in the present invention includes one in the form of liquid, steam, and the mixture thereof.

Dependent upon said temperature conditions and amount of water, it is possible to maintain the molecular weight of said ethylene-alkyl (meth)acrylate copolymer at any low molecular weight, and at the same time an ionically cross-linked ethylene-alkyl (meth)acrylate-(meth)acrylic acid ternary copolymer in which an arbitrary amount of alkyl (meth)acrylate remains can be produced.

The reaction between the acid groups in the low molecular weight ternary copolymer and a metallic cation in the present invention is a neutralizing reaction, and at the same time or succeedingly ionic cross-linkages are produced.

When this neutralized reaction product is compared with an unneutralized product, melt viscosity increases remarkably with an increase in the degree of neutralization. From this fact, it is found that there are ionic cross-linkages so that this is clearly distinguished from a mere salt. A metallic ion may be added in accordance with either a manner wherein such a metallic ion is added at the same time in the decomposition reaction of said ethylene-alkyl (meth)acrylate copolymer, or a manner wherein the produced low molecular weight ternary copolymer is post-crosslinked with such a metallic cation. The method for post-crosslinking is as follows. A ternary copolymer is supplied together with a cation-containing material to a reaction vessel. The oxygen content in the reaction vessel is reduced as far as possible, and the volatile reaction products are removed during the reaction. The temperature in the reaction vessel is controlled while maintaining such temperature at the melting point or higher, and the reaction mixture is continuously agitated to cause the same to react.

A part or the whole of the (meth)acrylic acid in the low molecular weight ternary copolymer may be reacted with said metallic cation, but it is preferable to react 15% through 90% of the (meth)acrylic acid.

The copolymer thus cross-linked with the metallic cation is in the solid state, so that the ionically cross-linked copolymer is tougher and more fragile than the copolymer which has not yet been cross-linked. The cross-linked product can be ground with a hardness of approximately the same with that of powder. When heated, the ionic cross-linkages begin to break so that the viscosity of the copolymer decreases. With the progress of cutting the ionic cross-linkages, the characteristic features of the melt become close to those of the copolymer itself. In the present invention, the low molecular weight ternary copolymer has a low molecular weight and a low viscosity.

The melt flows easily and does generally not exhibit the fabrication quality of typical thermoplastic resin.

The low molecular weight ternary copolymer ionically cross-linked with a metallic cation is useful as a lubricant or dispersion aid for polymers. Such a polymer lubricant has an acid value of 10 to 160 before the cross-linking of the copolymer. The acid value is specified by the milligram number of potassium hydroxide required for neutralizing 1 gram of the ternary copolymer.

The ionically cross-linked low molecular weight ternary copolymers according to the present invention have remarkable advantages as the undermentioned lubricants and dispersion aids, besides they are also applicable as coupling agents, crystallization promotors, crystal nucleus agents, paints, adhesives, sealing materials, textile treatments, sizing agents, modifiers for polymer, modifiers for printing ink and masking reagents for film.

The present invention provides also a composition comprising (A) 100 parts by weight of at least one polymer selected from the group consisting of thermoplastic resins, thermosetting resins, rubber, and the mixture thereof, and (B) 0.1 - 15 parts by weight of an ionically cross-linked low molecular weight ternary copolymer obtainable by reacting at least a part or the whole of acid groups in a low molecular weight ternary copolymer with a metallic cation having a valence in the range of 1 to 3, said low molecular weight ternary copolymer having a content of ethylene moieties of 80 - 99.5 mol% and a total content of acrylic or methacrylic acid and alkyl acrylate or methacrylate moieties of 0.5 - 20 mol%, the ratio between said acid and said ester moieties being from 10 - 90 to 90 - 10%, and a viscosity-average molecular weight within a range of 500 - 20.000, said low molecular weight ternary copolymer being prepared by thermally degrading at 200 to 500°C an ethylene-alkyl acrylate or methacrylate copolymer having a comparatively high molecular weight, wherein the melt index of said ethylene-alkyl acrylate or methacrylate copolymer having a comparatively high molecular weight is 300 g/10 min. or less, and the alkyl acrylate or methacrylate content in the molecular chain is 0.5 to 25 mol%.

The presence of that ionically cross-linked low molecular weight ternary copolymer exhibits remarkable advantages as a lubricant in processing said polymer.

A lubricant is added to a polymer in order to decrease the sticking thereof when molten, to improve flowability thereof, and to more easily process the polymer. Furthermore such a lubricant is generally used for decreasing the melt viscosity of a polymer at its processing temperature and/or decreasing the friction between the polymer and the metal surface of a processing machine.

Typical examples of polymerizing lubricants known in the art include paraffin wax; polyethylene wax; calcium stearate; esters, alcohols and acids of stearate; esters, acids and salts of montan base; stearates or amide wax. Moreover it is known in the art to use an ionic copolymer additive in varieties of polymer for improving characteristic features thereof. Such ionic copolymers disclosed in the art may be prepared from copolymers of $\alpha$-olefin and $\alpha$, $\beta$-ethylenically unsaturated carboxylic acid. These copolymers, however, exhibit generally a high molecular weight, and they can improve physical properties such as impact resistance, but cannot improve polymer properties relating to the processing therefor.

On one hand, it is difficult to conclude that said low molecular weight binary copolymer salt (Japanese Patent Laid-open No. 128704/1982) involves sufficient applicability as a lubricant or a dispersion aid for polymers, because in said binary copolymer salt it is not possible to freely control the melting and softening point of the polymers when the acid concentration (acid value) of said copolymer salt is kept constant.

The ionically cross-linked low molecular weight ternary copolymer according to the present invention has wider applicability than said binary copolymer, so that said ternary copolymer is utilized for a variety of lubricants.

Examples of said polymers include homopolymers such as low-, medium- and high-density polyethylene, polypropylene, polybutene-1 or poly-4-methyl-pentene-1, copolymers of ethylene or propylene, as their major component, and other $\alpha$-olefins such as ethylene-propylene copolymer, ethylene-butene-1 copolymer, ethylene-hexene-1 copolymer or propylene-ethylene copolymer, besides polyolefin polymers such as ethylene-vinyl acetate copolymer, polystyrene polymers, ethylene-vinyl acetate copolymer saponified products, polyvinyl alcohol polymers, polyamide polymers such as nylon 6, 66 or 12, polyester polymers such as polyethylene terephthalate or polybutylene terephthalate, thermoplastic resins such as polyvinyl chloride polymers, ABS polymer, polycarbonate polymers, polyphenylene oxide, polyphenylene sulfide, polyether sulfone, polyarylate, polyether ketone, polyether imide, polyimide, polyamide imide, petroleum resin or fluorine polymers, thermosetting resins such as phenolic resins, epoxides, urethane resins, urea resin, melamine resin, unsaturated polyester resins, guanamine resin, diallyl phthalate resin, vinyl ester resin or furan resin, and synthetic or natural rubbers such as ethylene-propylene copolymer rubber, ethylene-propylene-diene copolymer rubber, isoprene rubber, butyl rubber, styrene-butadiene copolymer rubber, polybutadiene, styrene-acrylonitrile copolymer rubber, polyurethane rubber, chlorosulfonated polyethylene, fluorine rubber, silicone rubber or Thiokol.

The composition according to the present invention may contain 0.1 - 15 parts, preferably 0.5 - 10 parts, and more preferably 1.0 - 8 parts by weight of said ionically cross-linked low molecular weight ternary copolymer per 100 parts by weight of such a polymer as described above.

The lubricating action of the ionically cross-linked low molecular weight ternary copolymer according to the present invention acts upon both the inner and outer surfaces of the polymer to be processed. Said ionically cross-linked low molecular weight ternary copolymers exhibit excellent thermal stability and can be applied to the above described variety of polymer. For example, the application of such a self-lubricating agent to be used in polyolefins represented by low-density polyethylene, ethylene-$\alpha$-olefin copolymer low-density polyethylene, high-density polyethylene and polypropylene as well as styrene polymers is dependent upon the compatibility of the lubricant with polymer to be lubricated. When it is necessary to select a lubricant, physical properties to be taken into consideration are its viscosity and hardness relating to molecular weight, whilst chemical compatibility is also important. Chemical compatibility is based on mutual action between chemical structure and component such as solubility between the molten lubricant and the polymer melt. When a lubricant is suitably in conformity with a polymer to be lubricated, the lubricant acts more favourably on the interior of the polymer.

In addition to solubility, the melting point of the lubricant, particularly internally acting lubricant is also important. When the melting point of a lubricant is substantially the same as that of the polymer to be lubricated, the molten lubricant acts upon the interior of its polymer melt thereby decreasing torque at the time of processing. On one hand, when the melting point of a lubricant is considerably lower than that of a polymer to be lubricated, such lubricant melts before the polymer softens completely. This results in excessive lubrication of the polymer by means of the lubricant. In an extruder, such excessive lubrication occurs in feed and transfer sections thereof. On the other hand, when the melting point of a lubricant is too high, a polymer melts first so that the lubricant exhibits excessive lubrication, and its torque decreases until both of them melt. In this case, although torque decreases, processing is not observed so that the slipping state appears. Accordingly, the closer temperatures are the better with respect to the softening points or melting points of both lubricant and polymer. In this respect, the low molecular weight ternary copolymers according to the present invention have an advantage of being capable of freely controlling their melting and softening point.

Said lubricants are useful for method of processing polymers in various processing operations such as molding and extrusion as well as mixing operations including roll milling, extrusion mixing, and internal mixing by means of a Banbury mixer.

A polymer to be processed is preferably pre-blended with the lubricant according to the present invention. Such pre-blending is a mere physical blending of the pellet polymer with the powdery or pellet-form lubricant. This blend is supplied to a processing equipment including molding equipment, extruder, mill, mixing extruder, or internal mixer. The polymer is separately supplied from lubricant to a processing equipment in mutual manner and dependent upon the processing equipment used.

The polymer is processed by means of the assistance of a lubricant. The lubricants according to the present invention may be used for processing a polymer at a temperature of from melting point of the polymer to about 400°C.

Furthermore Japanese Patent Publication Nos. 26225/1970 and 26226/1970 disclose a composition consisting of polyester such as polyethylene terephthalate, ethylene, and an ionic copolymer of $\alpha$, $\beta$-unsaturated carboxylic acid and wherein said ionic copolymer increases the rate of crystallization and improves the form stability of the molded articles. However, the ionically cross-linked low molecular weight ternary copolymers according to the present invention elevate much more the above described advantages, and thee function also as a crystallization promotor or a nucleating agent.

The present third invention provides a composition comprising:

(A) 100 parts by weight of at least one polymer selected from the group consisting of thermoplastic resins, thermosetting resins, rubber, and the mixture thereof;

(B) 0.1 - 150 parts by weight of a fine inert material; and the ionically cross-linked low molecular weight ternary copolymer according to the present invention, i.e.,

(C) 0.1 - 20 parts by weight of an ionically cross-linked low molecular weight ternary copolymer obtainable by reacting at least a part or the whole of acid groups in a low molecular weight ternary copolymer with a metallic cation selected from valences of 1 to 3, said low molecular weight ternary copolymer having a content of ethylene moieties of 80 - 99.5 mol% and a total content of acrylic or methacrylic acid and alkyl acrylate or methacrylate moieties of 0.5 - 20 mol%, the ratio of composition between said acid and said ester moieties being from 10 - 90 to 90 - 10%, and a viscosity-average molecular weight within a range of 500 - 20,000, said low molecular weight ternary copolymer being prepared by thermally degrading at 200 to 500°C an ethylene-alkyl acrylate or methacrylate copolymer having a comparatively high molecular weight, wherein the melt index of said ethylene-alkyl acrylate or methacrylate copolymer having a comparatively high molecular weight is 300 g/10 min. or less, and the alkyl acrylate or methacrylate content in the molecular chain is 0.5 to 25 mol%.

The presence of said ionically cross-linked low molecular weight ternary copolymer exhibits remarkable advantages in the case where said fine inert material is dispersed into said polymer, so that said ionically cross-linked low molecular weight ternary copolymer is utilized as a dispersion aid.

Moreover said ionically cross-linked low molecular weight ternary copolymer may be used as a coupling agent and possesses also such function of suitably activating the surface of the fine inert material.

Heretofore, a typical example of the dispersion aid as described above includes a low molecular weight polyethylene homopolymer.

Low molecular weight polyethylene homopolymer has been partially utilized as a compatible dispersion aid for polymers, but it cannot be used for nylon, polystyrene, polycarbonate, and polyester as dispersion aid, because of its incompatibility therewith.

In this connection, the ionically cross-linked low molecular weight ternary copolymers according to the present invention involve epoch-making advantage as a dispersion aid.

More specifically, the dispersion aids according to the present invention are useful for dispersing a fine inert material into polymer. With respect to the object of the present invention, the inert materials to be used are those which are not molten at the melting point of a polymer into which such fine inert materials are dispersed. In general, an average diameter of the material to be dispersed is 100 $\mu$m or less, and a common diameter thereof is 50 $\mu$m or less.

Category of materials which may be dispersed by means of the dispersion aids according to the present invention involves inorganic, organic, natural and synthetic pigments; lake dyestuffs; insoluble dyestuffs; fillers; flame-retardants; anti-oxidants; stabilizers; and their simulants.

These typical materials include titanium dioxide, zinc oxide, calcium carbonate, barytes, silica and china clay; white lead; carbon black; red lead: lead chrome pigment; Venetian Red; Persian Blue; chrome oxides; chrome green; copper blue; and cobalt blue. Typical lake dyestuffs include alumina dyed with a solution of natural organic colorants; and coal tar colorants deposited from solutions of various coal tar dyestuffs by means of metal salts, tannin or other suitable reagents.

Typically, fillers may be selected from a variety of minerals, metals, metal oxides, siliceous earth, and metal salts. An example of these fillers includes glass fiber, alumina, feldspar, asbestos, talc, calcium carbonate, clay, carbon black, quartz, novaculite and, as the other forms, silica, kaolinite, bentonite, garnet, mica, sapo-nite or beidellite.

In the present invention, 0.1 to 150 parts, preferably 0.1 to 70 parts by weight of the fine inert material may be dispersed into 100 parts by weight of the polymer. A lower concentration 0.1 to 1 part by weight of such fine inert material per 100 parts by weight of polymer is applicable for direct blending of a low concentration material such as a colorant. A higher concentration material of about 10 parts by weight or more is directly introduced into the polymer. A high concentration material of 10 to 70 parts by weight per 100 parts by weight of the polymer is utilized for a masterbatch of a colorant concentrate in order that such high concentration material is introduced into much more the same or different polymer.

The dispersion aids according to the present invention is used for polymers, selected from the group consisting of thermoplastic resins, thermosetting resins, rubbers, and the mixtures thereof.

The dispersion aid of the present invention is 0.1 - 20 parts, preferably 0.1 - 10 parts by weight with respect to 100 parts by weight of the polymer.

The dispersion aids according to the present invention can be prepared by means of any publicly known process in the art for producing ionically cross-linked low molecular weight ternary copolymers.

The dispersion aids of the present invention exhibit excellent thermal stability, and they may be used for a variety of polymers. The dispersion aids of the invention do not volatilize or discolor during processing. In definition, "compatibility" may be concluded as the ability to keep a situation where two or more of components are blended with each other so that a certain component is homogeneously dispersed in the other components. Physical compatibility depends upon processing conditions as well as physical properties of the dispersion aid and the polymer. Compatibility of a dispersion aid with a polymer relates to physical properties of the dispersion aid by which viscosity and hardness of said ionically cross-linked low molecular weight ternary copolymer concerning the molecular weight are influenced.

Furthermore chemical compatibility is also important, and is based on mutual action between components such as chemical structure, solubility between the molten copolymer and the polymer melt. Such a dispersion aid having the more favorable compatibility with a polymer exhibits the more homogeneous dispersibility.

In addition to compatibility, the melting point of the dispersion aids is also an important factor. In order to achieve the maximum dispersion, the melting point of the dispersion aid should be kept at a temperature as low as possible accompanied with no excessive lubrication. Generally, such dispersion aid melts before the polymer, into which a fine material is dispersed, also melts. With flow of the material through a resin, the dispersion aid wets the material and draws the same along said material.

The present invention includes a method for treating a polymer in order to finally maintain the maximum dispersion of the inert material. At first, a polymer, a dispersion aid, and a material to be dispersed are firmly blended with each other. The dispersion aid and polymer are in the powdery form, pellet- or tip-shape, whilst the material to be dispersed is preferably powdery. Then, the blend is fed to a means which melts the blend at the higher temperature of both the melting points of the polymer and the dispersion aid and compounds the blend. Otherwise the dispersion aid may be firmly admixed with the material to be dispersed. The admixture of the dispersion aid and the material to be dispersed is then mixed with the polymer, and the final mixture is molten and blended. The dispersion aid and the material to be dispersed thus molten and blended are then formed into pellet or another suitable shape, and they are firmly either admixed or molten and blended with the polymer. Such melting and blending means may include molding equipment, extruder, mill, mixing extruder and internal mixer.

The dispersion aid according to the present invention may be incorporated in a polymer at a temperature of the melting point of the polymer or more through about 400°C. Then, the polymer product thus formed and blended is collected.

Some examples will be described hereinbelow for the sake of explaining the true nature of the present invention as well as a method for embodying the invention.

The present invention relates to a novel, ionically cross-linked low molecular weight ternary copolymer, and which can be easily and arbitrarily oligomerized from a commercially available high molecular weight binary copolymer. Accordingly, properties required for lubricant or dispersion aid can be freely controlled in the present ionically cross-linked low molecular weight ternary copolymers, so that they involve wide applicability.

Furthermore the ionically cross-linked low molecular weight ternary copolymers according to the present invention possess not only remarkable advantages as lubricant and dispersion aid, but also functions of crystallization promotor, nucleating agent, and coupling agent.

Moreover the ionically cross-linked low molecular weight ternary copolymers according to the present invention are utilized as modifiers for said paints, adhesives, textile treatments, sealing materials, and polymers.

The invention will be described in more detail hereinbelow in conjunction with examples.

Reference Examples 1 - 4

A pressure vessel of 3.8 ℓ internal volume equipped with a magnetic stirrer was charged with 2 kg of ethylene-ethyl acrylate copolymer (ethyl acrylate content being 4.4 mol%, melt index being 9 g/10 min.) together with 1 kg of water. Nitrogen gas was bubbled from the bottom of said vessel for 1 hour to completely exclude oxygen dissolved in the water. Then, pressurizing (50 x $10^5$ Pa (kg/cm$^2$)) and releasing (1 x $10^5$ Pa (kg/cm$^2$)) operations of nitrogen gas were repeated five times with respect to air inside said pressure vessel, and when the oxygen concentration in the system was measured (Brady method), it was 1 ppm or less. The vessel was then heated, whereby thermal degradation was effected in nitrogen atmosphere at 350°C under 100 x $10^5$ Pa (kg/cm$^2$) for 4 hours.

It was found from the infrared absorption curve that the product was ethylene-acrylic acid-ethyl acrylate ternary copolymer, the composition of which involved 95.6 mol% ethylene (1460 cm$^{-1}$), 3.0 mol% acrylic acid (1700 cm$^{-1}$), and 1.4 mol% ethyl acrylate (1730 cm$^{-1}$), and the viscosity-average molecular weight of which was 5,000.

Furthermore the raw material ethylene-ethyl acrylate copolymer in Reference Example 1 was pyrolytically decomposed at a temperature of 340°C and 330°C to prepare a product having a molecular weight of 7,000 (Reference Example 2) and a product having a molecular weight of 10,000 (Reference Example 3), respectively, and analysis/results of the composition thereof are shown in Table 1.

Moreover, as Reference Example 4, the raw material ethylene-ethyl acrylate copolymer (hereinafter referred to simply as "EEA") in Reference Example 1 was replaced by one having an ethyl acrylate content of 2.0 mol% and a melt index of 5.0 g/10 min., and degraded thermally as in the case of Reference Example 1. The results thereof are shown in Table 1.

Examples 1 - 8

A pressure vessel of 3.8 $\ell$ internal volume equipped with a magnetic stirrer was charged with 2 kg of ethylene-ethyl acrylate copolymer (ethyl acrylate content being 4.4 mol%, melt index being 9 g/10 min.) together with 1 kg of water. Nitrogen gas was bubbled from the bottom of said vessel for 1 hour to completely exclude oxygen dissolved in the water. Then, pressurizing ($50 \times 10^5$ Pa (kg/cm$^2$)) and releasing ($1 \times 10^5$ Pa (kg/cm$^2$)) operations of nitrogen gas were repeated five times with respect to air inside said pressure vessel, and when the oxygen concentration in the system was measured (Brady method), it was 1 ppm or less. The vessel was then heated, whereby the raw material was reacted under the same conditions as those of Reference Example 1, i.e., in nitrogen atmosphere at 350°C under $100 \times 10^5$ Pa (kg/cm$^2$) for 4 hours. Thereafter, the reaction product was cooled to 200°C, and an aqueous solution prepared by dissolving 30 g of sodium hydroxide in 100 ml of water was poured into the reaction product while succeedingly controlling the same at 200°C, the resulting mixture was reacted at 200°C under $50 \times 10^5$ Pa (kg/cm$^2$) for 1 hour while agitating it, and then cooled by standing in air. It was found from the infrared absorption curve that the product was ethylene-acrylic acid-ethyl acrylate ternary copolymer cross-linked with Na$^+$, the composition of which involved 95.6 mol% ethylene (1460 cm$^{-1}$) and 1.4 mol% ethyl acrylate (1730 cm$^{-1}$), and absorption displacement of carboxyl group based on acrylic acid (1700 cm$^{-1}$) cross-linked with Na ion and ionic crosslinkage was observed at 1570 cm$^{-1}$ in 40% theoretical neutralization amount (1 mol of Na$^+$ion was equivalent to 1 mol of acrylic acid).

In Example 2, the amount of sodium hydroxide to be poured was increased to 70 g, and a cross-linked product having 90% theoretical neutralization percentage was produced in accordance with a similar manner to that of Example 1.

In Examples 3 - 6, thermal degradation was effected under similar conditions to those of Reference Examples 2 - 3, whilst a prescribed amount of Na ion was reacted in a similar manner to that of Example 1. The results thereof are shown in Table 1.

In Examples 7 - 8, thermal degradation was effected under similar conditions to those of Reference Example 4, whilst reaction was conducted by a similar manner to that of Example 1. The results thereof are shown in Table 1.

As indicated by the melt viscosity in Table 1, the higher melt viscosity is derived from the higher molecular weight. With increase in the amount of a metallic cation to be added, ionic crosslinkage increases and the viscosity increases also. More specifically, with the progress of neutralization from 0 to 40% in Reference Examples 1 - 4, substantial increase in viscosity is observed, and further with the progress of neutralization from 40% to 80 through 90%, a much more pronounced increase in the viscosity is observed. (In this case, the viscosity was measured by means of rotational viscometer (B-type viscometer).)

## Table 1

### Ternary Copolymer

| | ET | AA | EA | M.W. | M.C.M.(g) | | T.N.A.(%) | Vis.(cps) mPa·s |
|---|---|---|---|---|---|---|---|---|
| Ex.1 | 95.6 | 3.0 | 1.4 | 5,000 | NaOH | 30 | 40 | 1,780 |
| 2 | 95.6 | 3.0 | 1.4 | 5,000 | " | 70 | 90 | 30,300 |
| 3 | 95.6 | 2.5 | 1.9 | 7,000 | " | 26 | 40 | 5,800 |
| 4 | 95.6 | 2.5 | 1.9 | 7,000 | " | 58 | 90 | 50,200 |
| 5 | 95.6 | 2.0 | 2.4 | 10,000 | " | 21 | 40 | 48,200 |
| 6 | 95.6 | 2.0 | 2.4 | 10,000 | " | 46 | 90 | C.N.M. |
| 7 | 98.0 | 1.5 | 0.5 | 5,000 | " | 15 | 40 | 900 |
| 8 | 98.0 | 1.5 | 0.5 | 5,000 | " | 35 | 90 | 15,000 |
| Re.Ex.1 | 95.6 | 3.0 | 1.4 | 5,000 | - | | 0 | 510 |
| 2 | 95.6 | 2.5 | 1.9 | 7,000 | - | | 0 | 2,100 |
| 3 | 95.6 | 2.0 | 2.4 | 10,000 | - | | 0 | 10,200 |
| 4 | 98.0 | 1.5 | 0.5 | 5,000 | - | | 0 | 490 |

Abbreviation of terms in Table:
ET = ethylene, AA = acrylic acid, EA = ethyl acrylate, M.W. = molecular weight, M.C.M. = metallic cation material, T.N.A. = theoretical neutralization amount, Vis. = viscosity, C.N.M = could not measured.

Reference Examples 5 - 6

As a raw material EEA, EEA having 4.5 mol% ethyl acrylate content and 3.0 g/10 min. melt index and another EEA having 12.0 mol% ethyl acrylate content and 4.0 g/10 min. melt index were used, and thermally degraded products having each molecular weight of 7,000 and 8,800 were obtained under similar conditions to those of Reference Example 1 at each temperature of 340°C and 335°C. The analyzed composition is as shown in Table 2.

Examples 9 - 11

Examples 9 - 11 were conducted by cross-linking the ternary copolymers in said Reference Examples 5 - 6 with magnesium hydroxide. More specifically, 40 to 80% of the carboxyl groups in the low molecular weight ternary copolymers were neutralized by using the theoretical amount of magnesium hydroxide (1 mol of Mg$^{++}$ion was equivalent to 2 mol of acrylic acid) to produce ternary copolymers cross-linked with magnesium cation. Reaction was effected by utilizing a pressurizing type kneader in laboratory. More specifically, about 300 g of the low molecular weight ternary copolymer shown in Comparative Example in Table 2 was placed in the pressurizing type kneader having about 3 ℓ internal volume, and pressurizing (5 x $10^5$ Pa (kg/cm$^2$)) and releasing (1 x $10^5$ Pa (kg/cm$^2$)) operations of nitrogen gas were repeated ten times with respect to air inside said pressurizing type kneader to remove oxygen in the system. Then, the temperature of the contents in the kneader was raised to the reaction temperature of 170°C by means of electrical heating. The temperature was controlled at 170°C, and the reaction was continued until either the reaction is completed, or no volatile matter is produced from reacting mass in the reaction vessel. A prescribed amount of magnesium hydroxide was gradually added to react the contents in the vessel while suppressing bubbling due to production of volatile matter.

An absorption displacement of the carboxyl group based on ionic crosslinkage of Mg ion was observed at 1620 cm$^{-1}$.

Although it was tried to measure the melt viscosity of a product cross-linked neutralizingly by means of a rotational viscometer (B-type viscometer), there was a sample which could not be measured. Accordingly, the melt index was measured at 190°C (JIS K6760).

When Tables 1 and 2 are examined, it is found that with an increase of acrylic acid in samples, amount of metallic cation required for neutralization of the same percentage increases. When sodium hydroxide is compared with magnesium hydroxide in respect of the metallic cation material, magnesium hydroxide produces divalent metallic cation. This provides two positions with respect to the formation of ionic crosslinkage. Accordingly, the number of moles for magnesium ion was made half that of sodium ion in order to attain substantially the same degree of neutralization.

It is expected that with an increase in amount of metallic cation to be added, ionic crosslinkage increases and viscosity increases also, and this expectation has been just indicated in Tables 1 and 2. It is observed that with a progress of the neutralization from 0% in Reference Examples 1 - 6 to 40% in Examples, a substantial increase in the viscosity (decrease in melt index) appears, and further with the progress of such an increase from 40 to 80 through 90%, the viscosity increases (decrease in melt index) further.

In addition, when the composition of ethyl acrylate in the low molecular weight ternary copolymer is changed as shown in Example 11 and Comparative Example 16, it is possible to change both melting points of said copolymer and its metallically cross-linked product (DSC method). In the present Examples, since such high molecular weight ethylene-ethyl acrylate copolymer raw material of a high content of ethyl acrylate is selected, a prescribed amount of acrylic acid is produced by means of thermal degradation, so that a metallically cross-linked ternary copolymer having low melting point is obtained. This means that even in a copolymer involving a composition of a given amount of acrylic acid (acid value), when the amount of alkyl (meth)acrylate is changed, it is possible to change the melting point of the copolymer and that said ternary copolymer is more advantageous than a binary copolymer, when used as a lubricant or as a dispersion aid.

Table 2

| Ternary Copolymer mol% | | | | | | | | |
|---|---|---|---|---|---|---|---|---|
| | ET | AA | EA | M.W. | M.C.M. (g) | T.N.A. (%) | M.I.at 190°C (°C) | M.P. (°C) |
| Ex.9 | 95.6 | 2.4 | 2.0 | 7,000 | Mg(OH)$_2$ 2.7 | 40 | 2,400 | 105 |
| 10 | 95.6 | 2.4 | 2.0 | 7,000 | Mg(OH)$_2$ 5.4 | 80 | 560 | 102 |
| 11 | 88.4 | 3.4 | 8.2 | 8,800 | Mg(OH)$_2$ 7.6 | 80 | 50 | 85 |
| Re.Ex. 5 | 95.6 | 2.4 | 2.0 | 7,000 | - | 0 | >10,000 | 107 |
| 6 | 88.4 | 3.4 | 8.2 | 8,800 | - | 0 | 3,100 | 87 |

Abbreviation of terms in Table:

M.I. = melt index, M.P. = melting point.

Reference Examples 7 - 10

(Production of Each Raw Material Alkyl (Meth)acrylate)

In the present Examples, the binary copolymers of a comparatively high molecular weight were prepared. In each Example, the contents of a metallic autoclave type reactor having 3.8 ℓ internal volume equipped with a stirrer were replaced sufficiently by nitrogen and ethylene. Then, the reactor was charged with a prescribed amount of ethylene, n-hexane of chain transfer agent, and a copolymer, and further di-tert-butyl peroxide of polymerizing initiator was poured, thereafter the mixture was polymerized at a polymerizing temperature of 170°C under the polymerizing conditions indicated in Table 3 for a polymerizing time of 1 hour.

As the copolymers, methyl acrylate, t-butyl acrylate, ethyl methacrylate, and i-propyl methacrylate were used and the copolymer in the respective polymers produced was confirmed by the infrared absorption analytical method and determined. The results thereof are indicated in Table 3.

These polymers were thermally degraded in a similar manner to that of Reference Example 1, and the results thereof are indicated in Table 4.

## Table 3

### Peroxide

| | ET (g) | CP. (g) | Press. $(bar)_2$ $(kg/cm^2)$ | Temp. $(^oC)$ | di-T-BP (mmol) | Yield (g) | M.I. (g/10m.) | CP.cot. (mol%) |
|---|---|---|---|---|---|---|---|---|
| Re.Ex. 7 | 1,700 | MA60 | 1,600 | 170 | 0.05 | 320 | 2.1 | 4.2 |
| " 8 | 1,700 | t-BA100 | 1,600 | 170 | 0.05 | 380 | 9.4 | 5.6 |
| " 9 | 1,700 | EM90 | 1,600 | 170 | 0.05 | 340 | 6.7 | 5.3 |
| " 10 | 1,700 | i-PM60 | 1,600 | 170 | 0.05 | 360 | 8.7 | 2.1 |

Abbreviation of terms in Table:
CP. = copolymer, Press. = pressure, Temp. = temperature, di-t-BP = di-t-butyl peroxide, CP.cot. = copolymer content, MA = methyl acrylate, t-BA = t-butyl acrylate, EM = ethyl methacrylate, i-PM = i-propyl methacrylate.

Examples 12 - 19

In the present Examples 12 - 19, each degraded ternary copolymer obtained from the respective binary copolymers which had been prepared in Reference Examples 7 - 10 through thermal degradation as well as the low molecular weight ternary copolymers cross-linked with metallic cation were produced. The thermal degrading method was conducted in a similar manner to that of Examples 1 - 8, so that the resulting low molecular weight ternary copolymers were indicated as Reference Examples 7 - 10. Examples 12 - 19 were conducted in order to cross-linked with sodium hydroxide and magnesium hydroxide the low molecular weight ternary copolymers shown in Reference Examples 7 - 10. The cross-linking method was such that each copolymer was reacted by employing the pressurizing type kneader shown in Examples 9 - 11. The cross-linked low molecular weight ternary copolymer was confirmed by means of infrared absorption analytical method and rotational viscometer. The results thereof are shown in Table 4.

Table 4

| | | ET | Ac. | Est. | M.W. | M.C.M. (g) | T.N.A. (%) | Vis.at 200°C(cps)mPa•s |
|---|---|---|---|---|---|---|---|---|
| | | | | | Ternary Copolymer | | | |
| Ex.12 | | 96.0 | AA3.0 | MA1.0 | 3,000 | NaOH3.6 | 30 | 1,200 |
| 13 | | 96.0 | AA3.0 | MA1.0 | 3,000 | NaOH7.2 | 60 | 3,900 |
| 14 | | 94.6 | AA4.0 | t-BA1.4 | 9,500 | NaOH4.7 | 30 | 27,000 |
| 15 | | 94.6 | AA4.0 | t-BA1.4 | 9,500 | NaOH9.4 | 60 | 50,800 |
| 16 | | 95.0 | MAc1.9 | EM3.1 | 4,500 | NaOH2.2 | 30 | 1,300 |
| 17 | | 95.0 | MAc1.1 | EM3.1 | 4,500 | NaOH4.4 | 60 | 2,700 |
| 18 | | 98.0 | MAc1.5 | i-PM0.5 | 8,000 | $Mg(OH)_2$2.5 | 30 | 4,700 |
| 19 | | 98.0 | MAc1.5 | i-PM0.5 | 8,000 | $Mg(OH)_2$5.0 | 60 | 9,300 |
| Re.Ex. 7 | | 96.0 | AA3.0 | MA1.0 | 3,000 | - | 0 | 190 |
| 8 | | 94.6 | AA4.0 | t-BA1.4 | 9,500 | - | 0 | 9,400 |
| 9 | | 95.0 | MAc1.9 | EM3.1 | 4,500 | - | 0 | 430 |
| 10 | | 98.0 | MAc1.5 | i-PM0.5 | 8,000 | - | 0 | 2,600 |

Abbreviation of terms in Table:

Ac. = acid, Est. = ester, MAc = methacrylic acid.

## Examples 20 - 22 and Comparative Examples 1 - 2

In the following Examples 20 - 22 and Comparative Examples 1 - 2, ionically cross-linked low molecular weight ternary copolymers obtained by the reaction of ethylene-acrylic acid-ethyl acrylate copolymer and sodium hydroxide were shown as a lubricant for ethylene-α-olefin copolymer (straight chain low-density polyethylene). The reaction was effected in a similar manner to that of Examples 1 - 8. Lubricant A is one prepared by neutralizing 60% a copolymer having a viscosity-average molecular weight of 3,100 and a composition of 94.2 mol% ethylene, 4.0 mol% acrylic acid, and 1.8 mol% of ethyl acrylate with sodium hydroxide. On one hand, Lubricant B is one prepared by neutralizing 60% a ternary copolymer having a viscosity-average molecular weight of 11,000 and a composition of 94.2 mol% ethylene, 0.6 mol% acrylic acid, and 5.2 mol% of ethyl acrylate with sodium hydroxide similarly to that described above. The extruded form used in Examples 10 - 12 has 50 m/m screw diameter, and the die has a 1 m/m slit width. Each composition was sufficiently dryblended, and then once extruded and molten to be shaped into the pellet form in order to complete homogeneous blending. Thereafter properties of the lubricant were tested with the use of 50 m/m extruder.

As the straight chain low-density polyethylene (LLDPE), Nisseki® Linirex AF3310 (2.0 melt index, and 0.922 density) manufactured by Nippon Petrochemicals Co., Ltd. was used. On one hand, Nisseki® Rexlon F312 (2.0 melt index, and 0.922 density) manufactured by Nippon Petrochemicals Co., Ltd. was used as the low density polyethylene. In Examples 20 - 22, the result was observed that a lower number of revolutions in screw than that of the case where no lubricant was used in Comparative Example 1 brought in substantially the same amount of discharge. Besides, extreme end pressure of the extruder was also suppressed at a low value in the present Examples, so that advantageous effects of the lubricant were apparent. Likewise, extreme end pressure of the extruder was also suppressed at low value in case of 20% LDPE blend composition, and an improvement of working characteristics was observed. The results thereof are shown in Table 5.

Table 5 (bar)

| | R.O.C.(wt%) | N.R.(rpm) | E.C.(~A) | H.P.(kg/cm$^2$) | A.D.(g/m.) |
|---|---|---|---|---|---|
| Ex.20 | LLDPE+LT.A<br>95    5 | 53 | 45 | 275 | 334 |
| " 21 | LLDPE+LT.B<br>95    5 | 53 | 45 | 285 | 331 |
| C.Ex.1 | LLDPE<br>100 | 57 | 46 | 310 | 333 |
| Ex.22 | LLDPE+LDPE+LT.A<br>75    20    5 | 53 | 45 | 260 | 336 |
| C.Ex.2 | LLDPE+LDPE<br>80    20 | 54 | 45 | 290 | 329 |

Abbreviation of terms in Table:
R.O.C. = ratio of composition, N.R. = number of revolutions, E.C. = electric current, H.P. = head pressure, A.D. = amount of discharge, LT. = lubricant, C.Ex. = comparative example.

Examples 23 - 24 and Comparative Example 3

The present Examples demonstrate specific examples of ionically cross-linked ternary copolymers which were used as dispersion aids. A copolymer used as dispersion aid was an ionically cross-linked ternary copolymer having a viscosity-average molecular weight of 5,100 and a composition of 93.0 mol% ethylene, 4.2 mol% acrylic acid, and 2.8 mol% of ethyl acrylate, and 60% of acrylic acid of which were neutralized with magnesium hydroxide. As crystalline polypropylene, Nisseki Polypro J150G having 8 g/10 min. melt flow index and manufactured by Nippon Petrochemicals Co., Ltd. was used. As mica, Suzolite mica having 90 μm weight-average flake diameter, 50 average aspect ratio, and 0.24 g/cm$^3$ bulk specific gravity was used. As modified polypropylene, acrylic acid graft polypropylene having 20 g/10 min. melt flow index and 6 wt% acrylic acid content was employed.

Experiment was conducted by such that the crystalline polypropylene, the modified polypropylene, the mica, and said ionically cross-linked low molecular weight ternary copolymer, as a dispersion aid, were introduced into a Henschel mixer, admixed at a rate of 720 rpm for 3 minutes, and the resulting admixture was formed into ASTM type dumbbell by means of an injection molding machine, thereafter tensile strength at yield point and other physical properties were measured by utilizing said dumbbell. In Comparative Example 3, materials were processed and measured in accordance with the same manner with that of Examples 23 - 24 without adding any lubricant, and the results thereof are indicated in Table 6.

As is apparent from experimental Examples shown in Table 6, it was observed that polypropylene compositions mechanical properties of which had been improved were produced in the case where the low molecular weight ternary copolymer cross-linked with magnesium ion was used as a dispersion aid.

14

## Table 6

| Composition | | Ex. 23 | Ex. 24 | Comp. Ex. 3 |
|---|---|---|---|---|
| Polypropylene (55Crystalline + 5Modified) | wt% | 60 | 60 | 60 |
| Mica | " | 39.7 | 38 | 40 |
| I.C.L.MW.T.CP | " | 0.3 | 2 | |
| **Physical Properties** | | | | |
| Tensile Strength at Yield Point | $kg/cm^2$ | 360 | 380 | 260 |
| Breaking Extension | % | 10 | 15 | 10 |
| Bending Strength | $kg/cm^2$ | 610 | 680 | 470 |
| Bending Modulus | " | 62,000 | 65,000 | 58,000 |
| Heat Distortion Temperature | $^{o}C$ | 150 | 152 | 137 |

Abbreviation of term in Table:
I.C.L.MW.T.CP. = ionically cross-linked low molecular weight ternary copolymer.

Claims

1. An ionically cross-linked low molecular weight ternary copolymer obtainable by reacting at least a part or the whole of acid groups in a low molecular weight ternary copolymer with a metallic cation having a valence in the range of 1 to 3, said low molecular weight ternary copolymer having a content of ethylene moieties of 80-99.5 mol% and a total content of acrylic or methacrylic acid and alkyl acrylate or methacrylate moieties of 0.5-20 mol%, the ratio between said acid and said ester moieties being from 10-90 to 90-10 %, and a viscosity average molecular weight within a range of 500-20,000, and said low molecular weight ternary copolymer being obtained by thermally degrading at 200 to 500°C an ethylene-alkyl acrylate or methacrylate copolymer having a comparatively high molecular weight, wherein the melt index of said ethylene-alkyl acrylate or methacrylate copolymer having a comparatively high molecular weight is 300 g / 10 min. or less, and the alkyl acrylate or methacrylate content in the molecular chain is 0.5 to 25 mol%.

2. An ionically cross-linked low molecular weight ternary copolymer as claimed in claim 1 wherein the alkyl group of said alkyl acrylate or methacrylate moieties has 1 to 4 carbon atoms.

3. An ionically cross-linked low molecular weight ternary copolymer as claimed in claim 1 wherein said alkyl acrylate or methacrylate moieties are ethyl acrylate or methacrylate moieties.

4. A process for producing an ionically cross-linked low molecular weight ternary copolymer which comprises reacting at least a part or the whole of acid groups in a low molecular weight ternary copolymer with a metallic cation having a valence in the range of 1-3, said low molecular weight ternary copolymer having a content of ethylene moieties of 80-99.5 mol% and a total content of acrylic or methacrylic acid and alkyl acrylate or methacrylate moieties of 0.5-20 mol%, the ratio between said acid and said ester moieties being from 10-90 to 90-10 %, and a viscosity average molecular weight within a range of 500-20,000, and said low molecular weight ternary copolymer being obtained by thermally degrading at 200 to 500°C an ethylene-alkyl acrylate or methacrylate copolymer having a comparatively high molecular weight, wherein the melt index of said ethylene-alkyl acrylate or methacrylate copolymer having a comparatively high molecular weight is 300 g / 10 min. or less, and the alkyl acrylate or methacrylate content in the molecular chain is 0.5 to 25 mol%.

5. A process for producing an ionically cross-linked low molecular weight ternary copolymer as claimed in claim 4 wherein the alkyl group of said alkyl acrylate or methacrylate moieties has 1 to 4 carbon atoms.

6. A process for producing an ionically cross-linked low molecular weight ternary copolymer as claimed in claim 5 wherein said alkyl acrylate or methacrylate moieties are ethyl acrylate or methacrylate moieties.

7. A composition comprising:
(A) 100 parts by weight of at least one polymer selected from the group consisting of thermoplastic resins, thermosetting resins, rubbers, and the mixture thereof; and
(B) 0.1-15 parts by weight of an ionically cross-linked low molecular weight ternary copolymer obtainable by reacting at least a part or the whole of acid groups in a low molecular weight ternary copolymer with a metallic cation having a valence in the range of 1 to 3, said low molecular weight ternary copolymer having a content of ethylene moieties of 80-99.5 mol% and a total content of acrylic or methacrylic acid and alkyl acrylate or methacrylate moieties of 0.5-20 mol%, the ratio between said acid and said ester moieties being from 10-90 to 90-10 %, and a viscosity average molecular weight within a range of 500-20,000, and said low molecular weight ternary copolymer being obtained by thermally degrading at 200 to 500°C an ethylene-alkyl acrylate or methacrylate copolymer having a comparatively high molecular weight, wherein the melt index of said ethylene-alkyl acrylate or methacrylate copolymer having a comparatively high molecular weight is 300 g / 10 min. or less, and the alkyl acrylate or methacrylate content in the molecular chain is 0.5 to 25 mol%.

8. A composition comprising:
(A) 100 parts by weight of at least one polymer selected from the group consisting of thermoplastic resins, thermosetting resins, rubbers, and the mixture thereof; and
(B) 0.1-150 parts by weight of a fine inert material;
and
(C) 0.1-20 parts by weight of an ionically cross-linked low molecular weight ternary copolymer obtainable by reacting at least a part or the whole of acid groups in a low molecular weight ternary copolymer with a metallic cation having a valence in the range of 1 to 3, said low molecular weight ternary copolymer having a content of ethylene moieties of 80-99.5 mol% and a total content of acrylic or methacrylic acid and alkyl acrylate or methacrylate moieties of 0.5-20 mol%, the ratio between said acid and said ester moieties being from 10-90 to 90-10 %, and a viscosity average molecular weight within a range of 500-20,000, and said low molecular weight ternary copolymer being obtained by thermally degrading at 200 to 500°C an ethylene-alkyl acrylate or methacrylate copolymer having a comparatively high molecular weight, wherein the melt index of said ethylene-alkyl acrylate or methacrylate copolymer having a comparatively high molecular weight is 300 g / 10 min. or less, and the alkyl acrylate or methacrylate content in the molecular chain is 0.5 to 25 mol%.

**Patentansprüche**

1. Ionisch vernetztes ternäres Copolymeres mit niederem Molekulargewicht, erhältlich durch Umsetzen mindestens eines Teils der oder aller Säuregruppen in einem ternären Copolymeren mit niederem Molekulargewicht mit einem Metallkation, dessen Wertigkeit im Bereich von 1 bis 3 liegt, wobei das ternäre Copolymere mit niederem Molekulargewicht einen Gehalt an Ethyleneinheiten von 80 bis 99 Mol.-% und einen Gesamtgehalt an Acrylsäure- oder Methacrylsäure- und Alkylacrylat- oder Alkylmethacrylat-Einheiten von 0,5 bis 20 Mol-% hat, wobei das Verhältnis der Säureeinheiten zu den Estereinheiten 10-90 zu 90-10 % beträgt, und ein Viskositätsmittel des Molekulargewichts im Bereich von 500 bis 20 000 aufweist und wobei das ternäre Copolymere mit niederem Molekulargewicht durch thermischen Abbau eines Ethylen-Alkylacrylat- oder -Alkylmethacrylat-Copolymeren mit vergleichsweise hohem Molekulargewicht bei 200 bis 500°C erhalten wird, wobei der Schmelzindex des Ethylen-Alkylacrylat- oder -Alkylmethacrylat-Copolymeren mit vergleichsweise hohem Molekulargewicht 300 g/10 min oder weniger beträgt und der Gehalt an Alkylacrylat oder Alkylmethacrylat in der Molekülkette 0,5 bis 25 Mol-% beträgt.

2. Ionisch vernetztes ternäres Copolymeres mit niederem Molekulargewicht gemäß Anspruch 1, worin die Alkylgruppe der Alkylacrylat- oder Alkylmethacrylat-Einheiten 1 bis 4 Kohlenstoffatome enthält.

3. Ionisch vernetztes ternäres Copolymeres mit niederen Molekulargewicht gemäß Anspruch 1, in dem die Alkylacrylat- oder Alkylmethacrylat-Einheiten Ethylacrylat- oder -methacrylat-Einheiten sind.

4. Verfahren zur Herstellung eines ionisch vernetzten ternären Copolymeren mit niederem Molekulargewicht, das darin besteht, daß mindestens ein Teil der oder alle Säuregruppen in einem ternären Copolymeren mit niederem Molekulargewicht mit einem Metallkation einer Wertigkeit im Bereich von 1 bis 3 umgesetzt werden, wobei das ternäre Copolymere mit niederem Molekulargewicht einen Gehalt an Ethyleneinheiten von 80 bis 99, Mol.-% und einen Gesamtgehalt an Acrylsäure- oder Methacrylsäure- und Alkylacrylat- oder Alkylmethacrylat-Einheiten von 0,5 bis 20 Mol-% hat, wobei das Verhältnis der Säureeinheiten zu den Estereinheiten 10-90 zu 90-10 % beträgt und ein Viskositätsmittel des Molekulargewichts im Bereich von 500 bis 20 000 aufweist und wobei das ternäre Copolymere mit niederem Molekulargewicht durch thermischen Abbau eines Ethylen-Alkylacrylat- oder -Alkylmethacrylat-Copolymeren mit vergleichsweise hohem Molekulargewicht bei 200 bis 500°C erhalten ist, wobei der Schmelzindex des Ethylen-Alkylacrylat- oder - Alkylmethacrylat-Copolymeren mit vergleichsweise hohem Molekulargewicht 300 g/10 min oder weniger beträgt und der Gehalt an Alkylacrylat oder Alkylmethacrylat in der Molekülkette 0,5 bis 25 Mol-% beträgt.

5. Verfahren zur Herstellung eines ionisch vernetzten ternären Copolymeren mit niederem Molekulargewicht gemäß Anspruch 4, in dem die Alkylgruppe der Alkylacrylat- oder Alkylmethacrylat-Einheiten 1 bis 4 Kohlenstoffatome enthält.

6. Verfahren zur Herstellung eines ionisch vernetzten ternären Copolymeren mit niederem Molekulargewicht gemäß Anspruch 5, in dem die Alkylacrylat- oder Alkylmethacrylat-Einheiten Ethylacrylat- oder -methacrylat-Einheiten sind.

7. Zusammensetzung, enthaltend :
(A) 100 Gew.-Teile mindestens eines aus der Gruppe der thermoplastischen Harze, thermisch härtenden Harze, Kautschuke und Gemische dieser ausgewählten Polymeren, und
(B) 0,1 bis 15 Gew.-Teile eines ionisch vernetzten ternären Copolymeren mit niederen Molekulargewicht, erhältlich durch Umsetzen mindestens eines Teils der oder aller Säuregruppen in einem ternären Copolymeren mit niederem Molekulargewicht mit einem Metallkation, dessen Wertigkeit im Bereich von 1 bis 3 liegt, wobei das ternäre Copolymere mit niederen Molekulargewicht einen Gehalt an Ethyleneinheiten von 80 bis 99 Mol.-% und einen Gesamtgehalt an Acrylsäure- oder Methacrylsäure- und Alkylacrylat- oder Alkylmethacrylat-Einheiten von 0,5 bis 20 Mol-% hat, wobei das Verhältnis der Säureeinheiten zu den Estereinheiten 10-90 zu 90-10 % beträgt, und ein Viskositätsmittel des Molekulargewichts im Bereich von 500 bis 20 000 aufweist und wobei das ternäre Copolymere mit niederen Molekulargewicht durch thermischen Abbau eines Ethylen-Alkylacrylat- oder -Alkylmethacrylat-Copolymeren mit vergleichsweise hohem Molekulargewicht bei 200 bis 500°C erhalten wird, wobei der Schmelzindex des Ethylen-Alkylacrylat- oder - Alkylmethacrylat-Copolymeren mit vergleichsweise hohem Molekulargewicht 300 g/10 min oder weniger beträgt und der Gehalt an Alkylacrylat oder Alkylmethacrylat in der Molekülkette 0,5 bis 25 Mol-% beträgt.

8. Zusammensetzung, enthaltend :
(A) 100 Gew.-Teile mindestens eines aus der Gruppe der thermoplastischen Harze, thermisch härtenden Harze, Kautschuke und Gemische dieser ausgewählten Polymeren und
(B) 0,1 bis 150 Gew.-Teile eines feinteiligen inerten Materials,
und
(C) 0,1 bis 20 Gew.-Teile eines ionisch vernetzten ternären Copolymeren mit niederen Molekulargewicht, erhältlich durch Umsetzen mindestens eines Teils der oder aller Säuregruppen in einem ternären Copolymeren mit niederen Molekulargewicht mit einem Metallkation, dessen Wertigkeit im Bereich von 1 bis 3 liegt, wobei das ternäre Copolymere mit niederen Molekulargewicht einen Gehalt an Ethyleneinheiten von 80 bis 99 Mol.-% und einen Gesamtgehalt an Acrylsäure- oder

EP 0 194 677 B1

Methacrylsäure- und Alkylacrylat- oder Alkylmethacrylat-Einheiten von 0,5 bis 20 Mol-% hat, wobei das Verhältnis der Säureeinheiten zu den Estereinheiten 10-90 zu 90-10 % beträgt, und ein Viskositätsmittel des Molekulargewichts im Bereich von 500 bis 20 000 aufweist und wobei das ternäre Copolymere mit niederem Molekulargewicht durch thermischen Abbau eines Ethylen-Alkylacrylat- oder -Alkylmethacrylat-Copolymeren mit vergleichsweise hohem Molekulargewicht bei 200 bis 500°C erhalten wird, wobei der Schmelzindex des Ethylen-Alkylacrylat- oder -Alkylmethacrylat-Copolymeren mit vergleichsweise hohem Molekulargewicht 300 g/10 min oder weniger beträgt und der Gehalt an Alkylacrylat oder Alkylmethacrylat in der Molekülkette 0,5 bis 25 Mol-% beträgt.

**Revendications**

1.  Un copolymère ternaire de bas poids moléculaire réticulé ioniquement, susceptible d'être obtenu par réaction d'au moins une partie ou de la totalité des groupements acide d'un copolymère ternaire de bas poids moléculaire avec un cation métallique de valence comprise entre 1 et 3, ledit copolymère ternaire de bas poids moléculaire ayant une quantité totale de restes éthylène de 80-99,5 mol% et une quantité de restes acide acrylique ou méthacrylique et d'acrylate ou méthacrylate d'alkyle de 0,5-20 mol%, la proportion entre ledit acide et ledit ester se situant de 10-90 à 90-10 %, et un poids moléculaire moyen obtenu par mesure de viscosité compris entre 500 et 20 000, et ledit copolymère ternaire de bas poids moléculaire étant obtenu en dégradant thermiquement entre 200 et 500°C un copolymère éthylène-acrylate ou méthacrylate d'alkyle ayant, comparativement, un haut poids moléculaire, pour lequel l'indice de fusion dudit copolymère éthylène-acrylate ou méthacrylate d'alkyle ayant, comparativement, un haut poids moléculaire, est de 300 g/10 min ou moins, et la quantité de méthacrylate ou acrylate d'alkyle dans l'enchaînement moléculaire est de 0,5 à 25 mol%.

2.  Un copolymère ternaire de bas poids moléculaire réticulé ioniquement comme revendiqué dans la Revendication 1 dans lequel le groupe alkyle desdits restes acrylate ou méthacrylate d'alkyle a de 1 à 4 atomes de carbone.

3.  Un copolymère ternaire de bas poids moléculaire réticulé ioniquement comme revendiqué dans la Revendication 1 dans lequel lesdits restes acrylate ou méthacrylate d'alkyle sont des restes acrylate ou méthacrylate d'éthyle.

4.  Un procédé pour produire un copolymère ternaire de bas poids moléculaire réticulé ioniquement, qui comporte la réaction d'au moins une partie ou de la totalité des groupements acide d'un copolymère ternaire de bas poids moléculaire avec un cation métallique de valence comprise entre 1 et 3, ledit copolymère ternaire de bas poids moléculaire ayant une quantité totale de restes éthylène de 80-99,5 mol% et une quantité de restes acide acrylique ou méthacrylique et d'acrylate ou méthacrylate d'alkyle de 0,5-20 mol%, la proportion entre ledit acide et ledit ester se situant de 10-90 à 90-10 %, et un poids moléculaire moyen obtenu par mesure de viscosité compris entre 500 et 20 000, et ledit copolymère ternaire de bas poids moléculaire étant obtenu en dégradant thermiquement entre 200 et 500°C un copolymère éthylène-acrylate ou méthacrylate d'alkyle ayant, comparativement, un haut poids moléculaire, pour lequel l'indice de fusion dudit copolymère éthylène-acrylate ou méthacrylate d'alkyle ayant, comparativement, un haut poids moléculaire, est de 300 g/10 min ou moins, et la quantité de méthacrylate ou acrylate d'alkyle dans l'enchaînement moléculaire est de 0,5 à 25 mol%.

5.  Un procédé pour produire un copolymère ternaire de bas poids moléculaire réticulé ioniquement comme revendiqué dans la Revendication 4 dans lequel le groupe alkyle desdits restes acrylate ou méthacrylate d'alkyle a de 1 à 4 atomes de carbone.

6.  Un procédé pour produire un copolymère ternaire de bas poids moléculaire réticulé ioniquement comme revendiqué dans la Revendication 5 dans lequel lesdits restes acrylate ou méthacrylate d'alkyle sont des restes acrylate ou méthacrylate d'éthyle.

7.  Une composition comportant:
    (A) 100 unités en poids d'au moins un polymère sélectionné parmi le groupe des résines thermoplastiques, des résines thermodurcissables, des caoutchoucs et le mélange de ces derniers; et

18

(B) 0,1-15 unités en poids d'un copolymère ternaire de bas poids moléculaire réticulé ioniquement, susceptible d'être obtenu par réaction d'au moins une partie ou de la totalité des groupements acide d'un copolymère ternaire de bas poids moléculaire avec un cation métallique de valence comprise entre 1 et 3, ledit copolymère ternaire de bas poids moléculaire ayant une quantité totale de restes éthylène de 80-99,5 mol% et une quantité de restes acide acrylique ou méthacrylique et d'acrylate ou méthacrylate d'alkyle de 0,5-20 mol%, la proportion entre ledit acide et ledit ester se situant de 10-90 à 90-10 %, et un poids moléculaire moyen obtenu par mesure de viscosité compris entre 500 et 20 000, et ledit copolymère ternaire de bas poids moléculaire étant obtenu en dégradant thermiquement entre 200 et 500°C un copolymère éthylène-acrylate ou méthacrylate d'alkyle ayant, comparativement, un haut poids moléculaire, pour lequel l'indice de fusion dudit copolymère éthylène-acrylate ou méthacrylate d'alkyle ayant, comparativement, un haut poids moléculaire, est de 300 g/10 min ou moins, et la quantité de méthacrylate ou acrylate d'alkyle dans l'enchaînement moléculaire est de 0,5 à 25 mol%.

8. Une composition comportant:

(A) 100 unités en poids d'au moins un polymère sélectionné parmi le groupe des résines thermoplastiques, des résines thermodurcissables, des caoutchoucs et le mélange de ces derniers; et

(B) 0,1-150 unités en poids d'un matériau inerte fin; et

(C) 0,1-20 unités en poids d'un copolymère ternaire de bas poids moléculaire réticulé ioniquement, susceptible d'être obtenu par réaction d'au moins une partie ou de la totalité des groupements acide d'un copolymère ternaire de bas poids moléculaire avec un cation métallique de valence comprise entre 1 et 3, ledit copolymère ternaire de bas poids moléculaire ayant une quantité totale de restes éthylène de 80-99,5 mol% et une quantité de restes acide acrylique ou méthacrylique et d'acrylate ou méthacrylate d'alkyle de 0,5-20 mol%, la proportion entre ledit acide et ledit ester se situant de 10-90 à 90-10 %, et un poids moléculaire moyen obtenu par mesure de viscosité compris entre 500 et 20 000, et ledit copolymère ternaire de bas poids moléculaire étant obtenu en dégradant thermiquement entre 200 et 500°C un copolymère éthylène-acrylate ou méthacrylate d'alkyle ayant, comparativement, un haut poids moléculaire, pour lequel l'indice de fusion dudit copolymère éthylène-acrylate ou méthacrylate d'alkyle ayant, comparativement, un haut poids moléculaire, est de 300 g/10 min ou moins, et la quantité de méthacrylate ou acrylate d'alkyle dans l'enchaînement moléculaire est de 0,5 à 25 mol%.